# EUROPEAN PATENT SPECIFICATION

(11) **EP 3 213 602 B1**
(45) Date of publication and mention of the grant of the patent: **27.05.2020**
(21) Application number: 14905035.3
(22) Date of filing: 28.10.2014
(51) Int. Cl.: H05B 37/02, H05B 33/08

(54) **DUAL CONTROL LED DRIVER**
LED-TREIBER MIT DOPPELSTEUERUNG
CIRCUIT D'ATTACHE DE LED À DOUBLE COMMANDE

(43) Date of publication of application: 06.09.2017
(73) Proprietor: Texas Instruments Incorporated, Dallas, TX 75265-5474 (US)
(72) Inventor: RUAN, Chenjie, Shanghai 200125 (CN); DENG, Li, Shanghai 200122 (CN)
(74) Representative: Zeller, Andreas
(86) International application number: PCT/CN2014/089640
(87) International publication number: WO 2016/065528

(56) References cited:
- EP-A2- 2 549 835
- CN-A- 101 742 766
- CN-A- 102 077 692
- CN-U- 202 949 606
- CN-U- 203 590 559
- US-A1- 2012 056 551
- US-A1- 2013 009 556
- US-A1- 2013 009 557
- US-A1- 2013 069 545
- US-A1- 2014 055 046

## Description

### CROSS-REFERENCE TO RELATED APPLICATION

None.

### BACKGROUND

Light emitting diodes (LEDs) are useful in a number of applications including, for example, backlighting for liquid crystal display (LCD) based tablets, notebooks, monitors and televisions, collectively hereinafter referred to as matrix displays. LEDs may also be used for general lighting applications and a variety of other applications as well. In many such applications, the LEDs are supplied in a plurality of strings of serially connected LEDs. To control each such LED string, an LED driver may be provided to control the current level flowing through the LED string. US 2013/009556 and US 2013/009557 disclose electronic circuits and techniques for maintaining a consistent power delivered to a load. US 2013/069545 discloses a LED driving system and method.

### SUMMARY

Systems and methods to determine an active time portion of a switch to regulate an output voltage of a light emitting diode (LED) driver are disclosed herein. An LED driver includes a first switch to receive an input voltage from an input voltage source and coupled to an output voltage node, a second switch coupled to the plurality of LEDs, and a control logic coupled to the first and second switches. The first switch is configured to switch on and off so as to regulate a voltage level at the output voltage node, wherein the voltage level at the output voltage node is to power a plurality of LEDs. The second switch is configured to switch on and off so as to vary a brightness of the plurality of LEDs. Further, based on an external signal, the control logic is configured to control first and second control signals to switch on and off the first and second switches, respectively. Still further, based on an active time portion of the external signal, the control logic concurrently determines an active time portion of the second control signal and a number of switching cycles of the first control signal to switch on and off the first switch.

In another embodiment, a method includes receiving, by a control logic of a light emitting diode (LED) driver, an external pulse width modulated (PWM) signal, determining, by the control logic, a time period of a first control signal to alternately turn on an off a first switch of the LED driver, based on the external PWM signal, determining, by the control logic, an active time portion of a second control signal to control a second switch of the LED driver, and comparing, by the control logic, the active time portion of the second control signal and the time period of the first control signal. More specifically, the method further comprises, based on the comparison, determining, by the control logic, the amount of time to maintain alternately turning on and off the first switch of the LED driver.

In yet another embodiment, a system includes a voltage converter including a first switch that is to be controlled by a first control signal so as to cause the voltage converter to step up an input voltage to an output voltage that is usable to power a light emitting diode (LED) string, wherein the LED string includes a plurality of serially connected LEDs, a second switch coupled to the LED string, and configured to be controlled by a second control signal so as to control a brightness of the coupled LED string, and a control logic coupled to the first and second switches and, based on a received pulse width modulated (PWM) signal, configured to determine an active time portion of the second control signal, and, based on the active time portion of the second control signal, to further determine a number of switching cycles of the first control signal. In illustrative embodiments, to complete each switching cycle of the first control signal takes a time period to alternately turn on and off the first switch.

### BRIEF DESCRIPTION OF THE DRAWINGS

For a detailed description of various embodiments of the invention, reference will now be made to the accompanying drawings in which:
Figure 1 shows a block diagram of a light emitting diode (LED) driver in accordance with various embodiments;
Figure 2A shows waveforms of multiple signals while an ON time portion of a second pulse width modulated (PWM2) signal is greater than a predefined threshold in accordance with various embodiments;
Figure 2B shows waveforms of multiple signals while an ON time portion of a second pulse width modulated (PWM2) signal is less than a predefined threshold in accordance with various embodiments; and
Figure 3 shows a flow chart illustrating a method to determine an active time portion of a first pulse width modulated (PWM1) signal in accordance with various embodiments.

### NOTATION AND NOMENCLATURE

Certain terms are used throughout the following description and claims to refer to particular system components. As one skilled in the art will appreciate, companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...." Also, the term "couple" or "couples" is intended to mean either an indirect or direct connection. Thus, if a first device couples to a second device, that connection may be through a direct connection, or through an indirect connection via other devices and connections.

### DETAILED DESCRIPTION

The following discussion is directed to various embodiments of the invention. Although one or more of these embodiments may be preferred, the embodiments disclosed should not be interpreted, or otherwise used, as limiting the scope of the disclosure, including the claims. In addition, one skilled in the art will understand that the following description has broad application, and the discussion of any embodiment is meant only to be illustrative of that embodiment, and not intended to intimate that the scope of the disclosure, including the claims, is limited to that embodiment.

The emergence of various types of light emitting diodes (LEDs), such as high brightness LEDs, has led the conventional lighting world into a new era of solid state lighting. High optical efficiency, long operating lifetime, wide operating temperature range, and environmental friendliness are among some of the key features in favor of LED technology over incandescent or fluorescent lighting solutions.

Because of various benefits of LEDs, the LEDs are useful in a number of applications as noted above including backlighting for matrix displays (e.g., computer monitors, televisions, etc.), as well as for general lighting applications. In various LCD matrix displays, and in solid state lighting applications, such as backlighting, the LEDs may be supplied in a plurality of strings of serially connected LEDs. Due to the serial connection, the constituent LEDs of each LED string share a common current.

Typically, a brightness (light output intensity) of an LED can be controlled by either: (a) regulating an amplitude of a current through the LED, or (b) regulating the frequency and duty cycle of a series of current pulses (e.g., a pulse width modulated signal (PWM)) through the LED. In some embodiments, a combination of both techniques can also be used. More specifically, since a common current is shared by each LED in an LED string, in general, a current sink serially connected to the LED string may be used to control the brightness of the LED string. By regulating the current flowing through the current sink, the brightness of the LEDs in the string may be tuned for any suitable applications.

It is known that white light LEDs have relatively high turn on threshold voltages than other LEDs. It may be that the turn on voltage for a white light LED is even higher than the nominal voltage generated by a battery used to drive the LED string(s). Thus, a DC-to-DC boost converter may be employed to step up (i.e., increase) an input voltage source (e.g., a battery) to a higher output voltage. In illustrative embodiments, a boost converter may be implemented as a switching mode power supply (SMPS). A switching mode power supply is an electronic power supply that incorporates a switching regulator to convert electric power efficiently. In accordance with various embodiments, the regulator comprises one or more switches. The switches are controlled by PWM signals to turn on and off alternately so as to regulate the output voltage of the supply.

Although integrating the current sink with the SMPS into an LED driver may provide a regulated output voltage to drive the coupled LED string, it may still suffer from a rippled output voltage due to incomplete switching cycles of the SMPS. For example, as mentioned above, the switch of the SMPS may be controlled by a first PWM signal and the current sink coupled to the LED string may be controlled by a second switch in accordance with a second PWM signal. In general, the second PWM signal is configured to tune the brightness of the LED string by adjusting an effective current level of the current sink (e.g., a product of a current level and a duty cycle of the second PWM signal). More specifically, the first and second PWM signals may transition between lower and higher levels. While the second PWM signal is at the higher level, the current sink is on thereby permitting current to flow through the LED string; analogously, while the second PWM signal is at the lower level, the current sink is off and no current flows through the LED string. The duty cycle at which the LED string current turns on and off dictates the average current level through the LED string, and thus the brightness of the LEDs.

Because the instantaneous current level through the LED string changes throughout the cycle of the second PWM signal to attain a particular brightness level, the first PWM signal also may change to control the switch of the SMPS. More specifically, the presence of current flowing through the LED string creates a loading on the SMPS. Therefore, the first PWM signal may keep the switch of the SMPS turning on and off alternately by transitioning between higher and lower levels so as to regulate the output voltage of the SMPS at a desired level. The SMPS's output voltage thus is regulated while the current sink is on and current is being supplied by the power supply through the LED string. While the switch of the SMPS is caused to be turned on and off to regulate the power supply's output voltage, the SMPS is generally referred to as being in an "active" mode. In other words, during the active mode of the SMPS, the switch repeatedly toggles between off and on states in accordance with a defined duty cycle to regulate the output voltage.

On the other hand, no current flows through the LED string when the current sink is off during each of its on/off cycles. The lack of current flowing through the LED string results in a lack of loading on the SMPS, which may cause the first PWM signal to transition to and remain at its lower level to turn off the switch of the SMPS. The SMPS is said to be in the "inactive" mode while the first PWM signal is at the lower level. While in the inactive mode of the SMPS, the SMPS is incapable of regulating its output voltage, but then again the current sink is off as well and no current is flowing through the LED string. Thus, no voltage regulation is needed anyway.

Continuing with the above example, the second PWM signal controls the current sink to cause the LED string to achieve a desired brightness level and the first PWM signal controls the state of the switch of the SMPS to cause a transition the SMPS between the active and inactive modes in accordance with the second PWM signal. Generally, a duty cycle of the second PWM signal may vary depending on the applications of the LED string. In some applications, a relatively low duty cycle of the second PWM signal may be implemented, which means that the current sink will be on for a relatively short period of time during each cycle of the second PWM signal. If the time for which the current sink is on (the second PWM signal being high) is too short, there may not be enough time for the SMPS to transition from the previous inactive mode to the active mode. In turn, this may cause a relatively large, or intolerable, magnitude of a ripple voltage on the output voltage to the LED string. Such large ripple voltages are generally deemed as undesirable noise and may impact the performance of the LED string(s). The brightness of the LED changes with the current flowing through the LED string, and the current is generally controlled by the current sink. Thus, a small variation of the voltage to power the LED string, may in turn affect an operating voltage level for the current sink. Concurrently, the affected operating voltage level may result in a variation of the current flowing through the LED string. Such variation of the current may cause an unstable performance of the LED, and in turn may disadvantageously impact the performance of a device (e.g., a display device) which uses the LED string. Additionally, the ripple voltage on the output voltage may cause audible noise. Audible noise is generally referred to as noise residing within the acoustic frequency range (e.g., 20 Hz ∼ 20 kHz). The audible noise may result from a vibration of a capacitor, in accordance with the ripple voltage, wherein the capacitor is typically coupled to the output voltage node of the SMPS. Embodiments of the disclosure are described below that advantageously cause a reduction in the variation of the ripple on the output voltage, which advantageously may provide a more stable performance of the LED string.

Embodiments of disclosure provide systems and methods to reduce the ripple voltage by controlling an active mode of the SMPS in accordance with the duty cycle of the current sink's second PWM signal. More specifically, the time duration of the SMPS's active mode is forced to be extended past the turn-off point of the current sink if the duty cycle of the second PWM signal controlling the current sink is less than a predefined threshold. As such, a sufficient time portion for the switch of the SMPS is provided to eliminate or at least reduce the ripple on the output voltage thereby improving performance of the LED string.

Examples of the illustrative embodiments are directed to an SMPS that may be implemented as a DC-to-DC boost converter, however, the SMPS may be implemented as other types of converters such as, a buck boost converter, a forward converter, a flyback converter, or any suitable converter. Further, the disclosed methods and systems are described as being implemented with white light LEDs, but in general other types of LEDs (e.g., green, infrared, yellow, blue, etc.) can be driven as well by the disclosed converter.

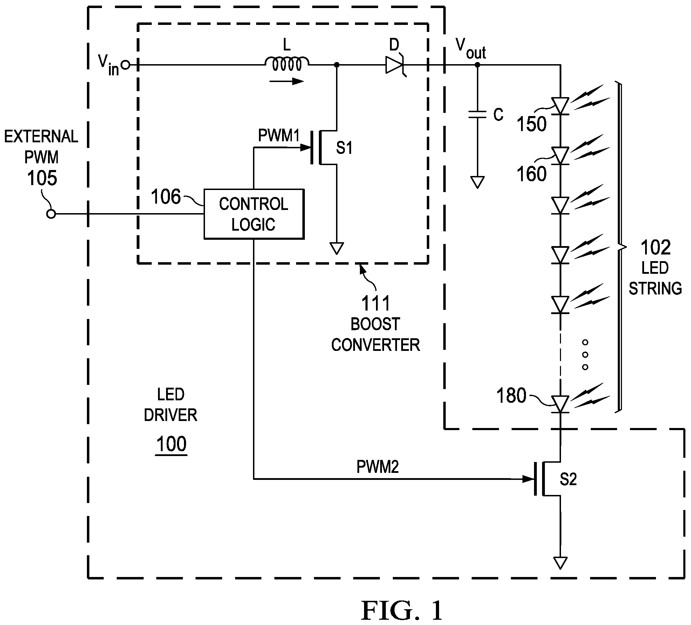

Figure 1 shows a top-level block diagram of an LED driver 100 in accordance with various embodiments. The disclosed LED driver 100 is coupled to an LED string 102. As shown in the example of Figure 1, the LED driver 100 includes a boost converter 111 and a switch S2. Switch S2 implements a current sink.

In the example of Figure 1, the boost converter 111 includes control logic 106, a switch S1, an inductor L that received an input voltage Vᵢₙ, and a diode D. Further, a capacitor C is generally coupled to the output voltage Vₒᵤₜ. The connection between the capacitor C and the diode D represents the output voltage Vₒᵤₜ from the converter 111. The capacitor C may be integrated with the LED driver 100 or may be an external component coupled to the LED driver 100. The switches S1 and S2 may be coupled to the LED string 102 as shown. Switch S1 is coupled to an anode of a first LED (LED 150) of the LED string. The current that flows through the LED string 102 also flows through switch S2 (which represents the current sink) to ground. In some embodiments, the switches S1 and S2 are semiconductor devices such as metal oxide field effect transistors (MOSFET) or bipolar junction transistors (BJTs).

The LEDs of the LED string 102 are electrically coupled in series with each other. More particularly, an anode of the first LED 150 of the string forms a first terminal of the LED string 102 and receives the output voltage Vₒᵤₜ from the converter 111. A cathode of the first LED 150 is electrically coupled to an anode of the second LED 160 in the string and so on, with the cathode of the last LED 180 in the string representing a second terminal of the LED string 102. Although there is only one LED string 102 shown in Figure 1, in other embodiments, multiple LED strings may be coupled to and operated by the LED driver 100. In the event multiple strings are present, each of the multiple LED strings may be arranged in parallel with each other so as to form an LED array.

The boost converter 111 generates the output voltage Vₒᵤₜ based on the input voltage Vᵢₙ such that the output voltage is a higher voltage than the input voltage. Thus, the input voltage Vᵢₙ from an input voltage source, for example, a battery may be received by a direct current-to-direct current (DC-to-DC) boost converter and boosted to a desired output voltage for powering various electrical components (e.g., the LED string 102) that require a particular regulated voltage. In an example, the switch S1 may be configured to turn repeatedly on and off so as to regulate the level of the output voltage Vₒᵤₜ. The on/off state of the switch S1 in the boost converter 111 is controlled by control logic 106 by way of the pulse width modulation (PWM) signal, PWM1.

The PWM1 signal may be a time-varying square wave that transitions between lower and higher levels. The repeated transitions cause the switch S1 to turn on an off. Alternatively or additionally, PWM1 signal may be controlled by the control logic 106 to cause the boost converter 111 to operate in an "active" or "inactive" mode in accordance with a loading at the output voltage node Vₒᵤₜ. When the boost converter 111 is in the active mode, the switch S1 is turned repeatedly on and off with a particular frequency and duty cycle to provide a voltage level to drive a heavier loading (e.g., a higher brightness level of the coupled LED string) at the output voltage node Vₒᵤₜ. With the switch S1 being turned on and off, the output voltage Vₒᵤₜ is regulated.

When there is little or no loading on the boost converter (e.g., the current sink switch S2 is off), the boost converter 111 is caused to be in the inactive mode in which its switch S1 is maintained in an off state in order to increase the efficiency of the LED driver 100. The loading of the boost converter 111 may be based, for example, on a current flowing through the LED string 102.

As mentioned above, in an implementation, the switch S2 may be a current sink that is configured to tune the brightness of the LED string 102. The brightness of the LED can be regulated by controlling the magnitude of current flowing through the LED string 102. Moreover, the regulated current through the LED string 102 may be controlled, at least in part, by the PWM2 signal asserted by the control logic 106 and used to operate switch S2. Analogously with the PWM1 signal, the PWM2 signal may also alternate between higher and lower levels with a particular frequency (and thus, period). More specifically, a time portion during which the PWM2 signal is at the higher level is a function of the frequency and duty cycle of the PWM2 signal.

Figure 1 also shows an external PWM signal 105 which is provided to the control logic 106. In some implementations, the duty cycle of the PWM2 signal is controlled by the control logic 106 based on a duty cycle of an external PWM signal 105. The duty cycle and frequency (or period) of the external PWM signal 105 may be specified by a user who intends to use the LED driver 100 to control the brightness of the coupled LED string 102. As explained above, a higher duty cycle of the PWM2 signal may cause a higher average current level through the LED string 102 thereby causing a higher brightness level of the LEDs. Thus, the user may use circuitry (not shown) to control the duty cycle of the external PWM signal 105. The control logic 106 generates the PWM2 signal based on the external PWM signal 105. A higher duty cycle for the external PWM signal 105 causes the control logic 106 to increase the duty cycle of the PWM2 signal.

In operation of the disclosed LED driver 100, the control logic 106 generates the PWM2 based on the duty cycle and period of the received external PWM signal 105 to tune the brightness of the LED string 102 through control of the duty cycle of switch S2. In an illustrative embodiment, the duty cycle and the period (or frequency) of the PWM2 signal are the same as that of the external PWM signal 105. Further, when the switch S2 is on (i.e., PWM2 at the higher level), a higher current level may flow through the LED string 102 than with the switch S2 off. Concurrently, the control logic 106 determines the higher current level resulting from switch S2 being on and may determine that the boost converter 111 has a heavier loading. If the control logic 106 determines that the boost converter is loaded with a higher current (heavier loading), the control logic 106 may implement the active mode for the boost converter 111 and repeatedly causes the switch S1 to transition between on and off states as explained above. However, when the switch S2 is off (i.e., PWM2 at the lower level), the control logic 106 determines that the boost converter 106 has a lighter loading or in some embodiments, no loading, and thus the control logic 106 implements the inactive mode for the boost converter 111 thereby causing the switch S1 to transition to the inactive (off) state.

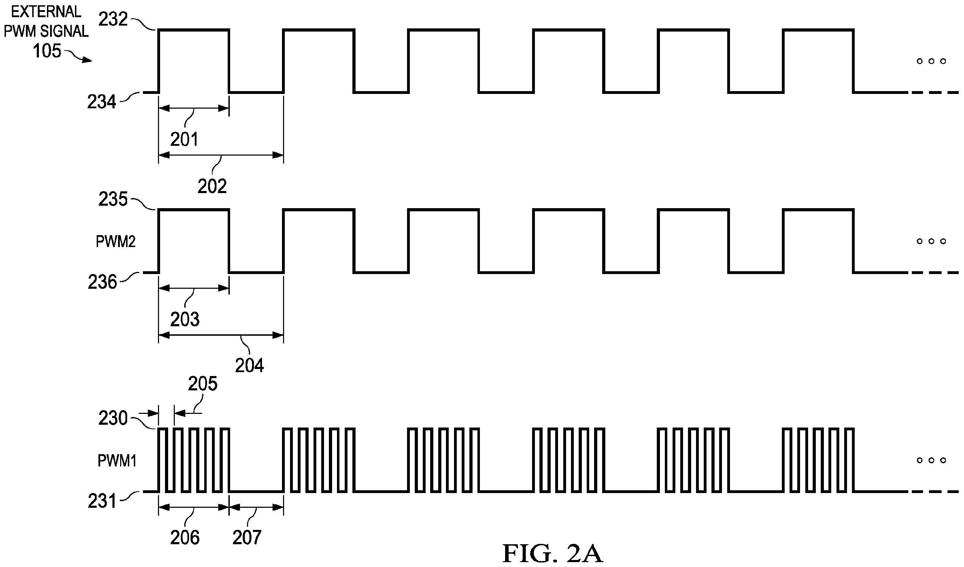

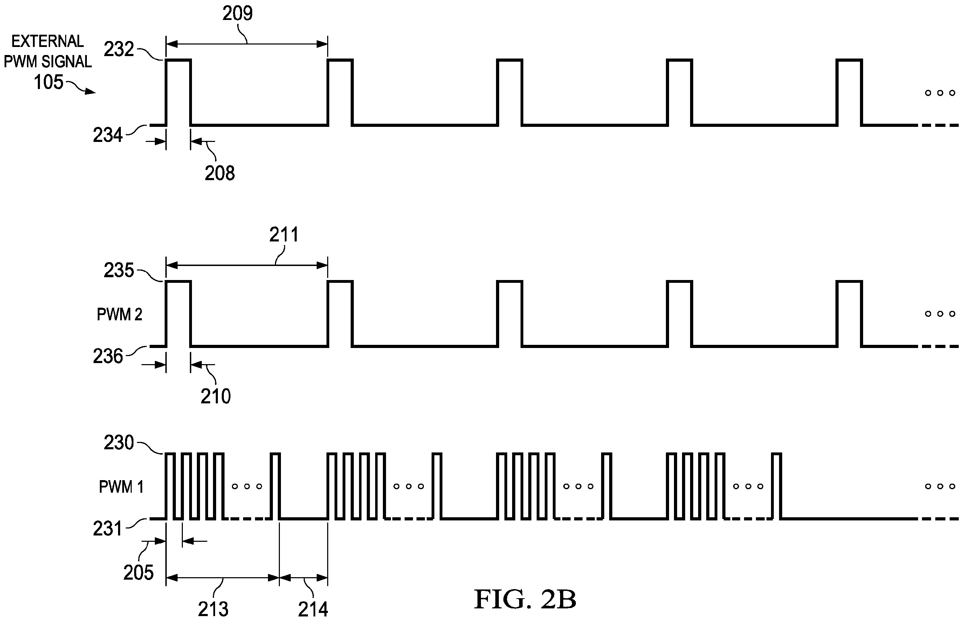

When the switch S2 is on, the control logic 106 determines whether the ON time portion of the PWM2 signal is less than a predefined threshold. If ON time portion of the PWM2 signal is indeed less than the threshold, the control logic 106 may implement the active mode for a period of time that extends past the point at which the ON time has ended for the PWM2 signal. On the other hand, if the ON time portion of the PWM2 signal is greater than the threshold, the control logic 106 may control the active mode based on the period of the PWM2 signal. Details of the coordination of the PWM1 and PWM2 signals will be explained with respect to the waveforms in Figures 2A and 2B.

Figures 2A and 2B show waveforms of the external PWM signal 105 and the PWM signals PWM1 and PWM2 in two respective scenarios. One scenario is when the on time of switch S2 (i.e., ON time portion of the PWM2 signal) is greater than the predefined threshold (Figure 2A) and the other scenario is when the on time of switch S2 is less than the predefined threshold (Figure 2B).

In accordance with various embodiments, the predefined threshold may be specified by the user as a product of a predefined number of switching cycles of the PWM1 signal and the period of PWM1 signal. Alternatively, the user may specify the number of switching cycles and the period of PWM1 signal as an input provided to the control logic 106, and the control logic 106, based on what the user provides, is configured to compute the product of the number of switching cycles and the period of the PWM1 signal. The period of the PWM1 signal may be synchronized by a clock frequency that is defined by the user. The switching cycle is defined as a cycle of a PWM signal to complete one transition from the lower level to higher level and back to the lower level. The switching frequency also corresponds to the on/off cycle of the switch S1 being controlled by the PWM1 signal. The predefined number of switching cycles is decided by the user in order to reduce the ripple voltage at the output voltage node (e.g., Vₒᵤₜ) of the boost converter as much as possible. As mentioned above, the ripple voltage may result from insufficient time for the boost converter's switch S1 to regulate the output voltage. More specifically, the switch S1 does not have enough time to regulate the voltage level at the output voltage node to a stable value. By permitting the switch S1 to transition through a sufficient number of cycles, the output voltage will be able to reach a stable target voltage level, and the amount of ripple on the output voltage will be reduced. In an example, the number of switching cycles for S1 to accommodate this result may be at least 20.

In Figure 2A, the external PWM signal 105 provided to the control logic 106 is characterized by an ON time portion 201 and a period 202. During the ON time portion 201, the external PWM signal 105 is at the higher level 232; otherwise the external signal is at the lower level 234.

In some embodiments, the control logic 106 may use the ON time portion 201 and the period 202 of the external PWM signal 105 to determine the ON time portion 203 for the PWM2 signal and period 204 for the cycles of the PWM2 signal between the higher level 235 and the lower level 236. The ON time portion 201 of the external PWM signal 105 and the ON time portion 203 of the PWM2 signal are the same, and the periods 202 and 204 for the external and PWM2 signals are also the same. Thus, the PWM2 signal is identical and synchronized to the external PWM signal 105. Alternatively, the PWM2 signal may not be identical to the external PWM signal 105. For example, the ON time portion 203 of the PWM2 signal may not be the same as the ON time portion 201 of the external PWM signal 105 as long as the configured current sink current and the duty cycle (i.e., ON time portion 203 / period 204) of the PWM2 signal is proportional to the duty cycle (i.e., ON time portion 201 / period 202) of the external PWM signal 105.

The PWM1 signal includes an active time portion 206 and an inactive time portion 207 which correspond to the active and inactive modes for the boost controller 111. During the active time portion 206, the PWM1 signal transitions between the higher level 230 and the lower level 231 as shown. Although the PWM1 signal in the example of Figure 2A shows five pulses (i.e., five switching cycles), in other embodiments, the PWM1 signal may include any number of switching cycles during each active time portion. On the other hand, while the PWM1 signal is at the inactive time portion 207, the control logic 106 forces the PWM1 signal to the lower level 231. In some illustrative embodiments, based on the ON time portion 203 of the PWM2 signal, the control logic 106 determines that the ON time portion 203 is greater than the predefined threshold which may be previously programmed into the control logic 106. The control logic 106 then determines an active time portion 206 of the PWM1 signal to be equivalent to the ON time portion 203 of the PWM2 signal.

In Figure 2B, the external PWM signal 105 transitions between the higher level 232 and the lower level 234, however, with a shorter ON time portion 208 than the ON time portion 201 in Figure 2A. The external PWM signal 105 in the example of Figure 2B is characterized by a period 209. In a illustrative implementation as explained above, based on the external PWM signal 105, the control logic 106 determines the ON time portion 210 of the PWM2 signal to equal the ON time portion 208 of the external PWM signal 105, and the periods 209 and 211 to equal each other as well (i.e., the PWM2 signal is identical and synchronized to the external PWM signal 105), although they can be different in other embodiments.

The control logic 106 determines whether the ON time portion 210 of the PWM2 signal is less than the predefined threshold which is the product of the predefined number of switching cycles of the PWM1 signal and the period of the PWM1 signal which is shown in Figure 2B as period 205. In Figure 2B, the control logic 106 will determine that the ON time portion 210 of the PWM2 signal is less than the predefined threshold. As a result of that determination, the control logic 106 forces the PWM1 signal to transition between the higher and lower levels 230 and 231 for at least N times. In accordance with various embodiments, N is equal to the predefined number of switching cycles used to compute the threshold (e.g., 20). An active time portion 213 of the PWM1 signal may equal a product of the period 205 of the PWM1 signal times N. By forcing the PWM1 signal to switch for N times (even extending past the end of the ON time portion 210 of the PWM2 signal), the control logic 106 may advantageously provide a sufficient period of time for the PWM1 signal to control the boost converter to reach a stable voltage level at the output voltage node Vₒᵤₜ to thereby reduce or eliminate the ripple voltage on the output voltage Vₒᵤₜ.

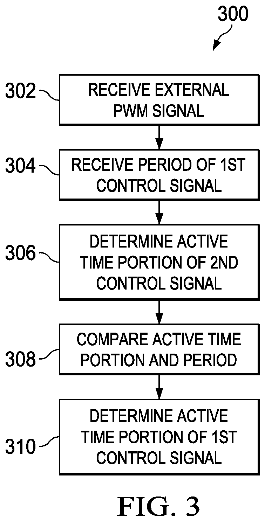

Figure 3 shows a flow chart 300 illustrating a method to reduce a ripple voltage of a boost converter that is to power an LED string in accordance with various embodiments. The flow chart 300 begins in block 302 with receiving, for example, by the control logic 106 of the disclosed LED driver 100, the external PWM signal 105. In accordance with various implementations, the external PWM signal 105 may include ON time portions 201 and 208 in Figure 2A and 2B respectively and periods 202 and 209.

The flow chart 300 continues at block 304 with receiving, by the control logic 106, the period (e.g., period 205 in Figure 2A and 2B) of PWM1 signal. The period is the amount of time for the PWM1 signal to complete a transition between the lower and higher levels 230 and 231. In some embodiments, the transition of PWM1 signal causes the switch S1 of the LED driver 100 to turn on and off.

At block 306, the flow chart 300 continues with determining, by the control logic 106, the ON time portion of PWM2 signal. In an example, the ON time portion of PWM2 signal may be equivalent to the ON time portion of the received external PWM signal 105.

Based on the ON time portion of PWM2 signal, the flow chart 300 continues at block 308 with comparing the ON time portion of the PWM2 signal and the period of the PWM1 signal.

Referring still to Figure 3, based on the comparison, the flow chart 300 continues at block 310 with determining, by the control logic 106, the active time portion of PWM1 signal. More specifically, if the ON time portion of PWM2 signal is less than the product of the predefined number of turning on and off PWM1 signal times the period of PWM1 signal (e.g., period 205), the control logic 106 determines that the amount of time to maintain alternately turning on and off the switch S1, that is the active time portion of PWM1 signal (e.g., active time portions 206 and 213), to be equivalent to the predefined number. However, if the ON time portion of PWM2 signal is greater than the product of the predefined number of turning on and off PWM1 signal times the period of PWM1 signal (e.g., period 205), the control logic 106 determines the active time portion of PWM1 signal (e.g., active time portion 206) to equal the ON time portion of PWM2 signal. Additionally or alternatively, if the control logic 106 determines that the ON time portion 203 does not exactly equal the product of the predefined number of turning on and off PWM1 signal times the period of PWM1 signal (e.g., period 205), the control logic 106 may extend the active time portion 206 (i.e., greater than the ON time portion 203) so as to enable the PWM1 signal to complete a last switching cycle.

## Claims

1. A light emitting diode LED driver, comprising:
a first switch (S1) to receive an input voltage from an input voltage source (Vᵢₙ) and coupled to an output voltage node, said switch configured to switch on and off so as to regulate a voltage level at the output voltage node, wherein the voltage level at the output voltage node is to power a plurality of LEDs (102);
a second switch (S2) coupled to the plurality of LEDs (102), and configured to switch on and off the current through the plurality of LEDs so as to vary a brightness of the plurality of LEDs (102); and
a control logic (106) coupled to the first and second switches (S1, S2), and, based on an external pulse width modulated PWM signal, configured to control first and second control signals (PWM1, PWM2) to switch on and off the first and second switches (S1, S2), respectively;
**characterised in that**, based on an active time portion of the external signal, the control logic (106) is configured to concurrently determine the active time portion of the second control signal (PWM2) and the number of switching cycles of the first control signal (PWM1) to switch on and off the first switch (S1).

2. The LED driver of claim 1 wherein the first, and second control signals are pulse width modulated PWM signals.

3. The LED driver of claim 2 wherein the active portion of time of the second control signal (PWM2) is associated with a duty cycle of the second control signal (PWM2).

4. The LED driver of claim 1 wherein if the active portion of time of the second control signal (PWM2) is less than a product of a predefined number of switching cycles of the first control signal times a time period of the first control signal (PWM1), the control logic (106) is configured to determine the number of switching cycles of the first control signal (PWM1) to be equivalent to or greater than the predefined number of switching cycles; optionally wherein the predefined number of switching cycles of the first control signal (PWM1) causes a reduction of a ripple of the voltage level at the output voltage node.

5. The LED driver of claim 1 wherein if the active time portion of the second control signal (PWM2) is greater than a product of a predefined number of switching cycles of the first control signal times a time period of the first control signal (PWM1), the control logic (106) is configured to cause the amount of time to maintain alternatively turning on and off the first switch (S1) to equal the active time portion of the second control signal (PWM2).

6. The LED driver of claim 1 further comprising a current sink coupled to the second switch (S2), said current sink configured to determine a level of current flowing through the plurality of LEDs (102).

7. A method, comprising:
receiving, by a control logic (106) of a light emitting diode LED driver, an external pulse width modulated PWM signal;
receiving, by the control logic (106), a time period of a first control signal (PWM1) to alternately turn on an off a first switch (S1) of the LED driver;
based on an active time portion of the the external PWM signal, concurrently determining, by the control logic (106), an active time portion of a second control signal (PWM2) to control a second switch (S2) of the LED driver and a number of switching cycles of the first control signal (PWM1) to switch on and off the first switch (S1);
comparing, by the control logic (106), the active time portion of the second control signal (PWM2) and the time period of the first control signal (PWM1); and
based on the comparison, determining, by the control logic (106), the amount of time to maintain alternately turning on and off the first switch (S1) of the LED driver;
outputting the second control signal (PWM2) to said second switch (S2) and said first control signal to said first switch (S1);
wherein an LED string that includes a plurality of LEDs (102) connected serially is coupled to the first and second switches (S1, S2).

8. The method of claim 7 wherein comparing the active time portion of the second control signal (PWM2) and the time period of the first control signal (PWM1) further includes:
if the active time portion of the second control signal (PWM2) is less than a product of a predefined number of turning on and off the first control signal times the time period of the first control signal (PWM1), determining the amount of time to maintain alternately turning on and off the first switch (S1) to be equivalent to the predefined number;

9. The method of claim 7 wherein comparing the active time portion of the second control signal (PWM2) and the time period of the first control signal (PWM1) further includes:
if the active time portion of the second control signal (PWM2) is greater than a product of a predefined number of turning on and off the first control signal times the time period of the first control signal (PWM1), determining the amount of time to maintain alternately turning on and off the first switch (S1) to equal the active time portion of the second control signal (PWM2).

10. The method of claim 7 wherein comparing the active time portion of the second control signal (PWM2) and the time period of the first control signal (PWM1) further includes:
if the active time portion of the second control signal (PWM2) is greater than but not equivalent to a product of a predefined number of turning on and off the first control signal times the time period of the first control signal (PWM1), determining the amount of time to maintain alternately turning on and off the first switch (S1) to be greater than the active time portion of the second control signal (PWM2).

11. The method of claim 7 wherein the first and second control signals (PWM1, PWM2) are PWM signals.

12. The method of claim 7 wherein the second control signal (PWM2) is configured to control, via a current sink, a current level that is passed through the LED string coupled to the second switch (S2) and the current sink.

## Patentansprüche

1. Leuchtdioden (Light Emitting Diode, LED)-Treiber, umfassend:
einen ersten Schalter (S1) zum Empfangen einer Eingangsspannung von einer Eingangsspannungsquelle (Vᵢₙ) und gekoppelt mit einem Ausgangsspannungsknoten, wobei der Schalter dafür ausgelegt ist, ein- und auszuschalten, um einen Spannungspegel an dem Ausgangsspannungsknoten zu regeln, wobei der Spannungspegel an dem Ausgangsspannungsknoten mehrere LEDs (102) mit Strom versorgen soll;
einen zweiten Schalter (S2), der mit den mehreren LEDs (102) gekoppelt und dafür ausgelegt ist, den Strom durch die mehreren LEDs ein- und auszuschalten, um eine Helligkeit der mehreren LEDs (102) zu variieren; und
eine Steuerlogik (106), die mit dem ersten und dem zweiten Schalter (S1, S2) gekoppelt ist, und, basierend auf einem externen pulsbreitenmodulierten PWM-Signal, dafür ausgelegt ist, ein erstes und ein zweites Steuersignal (PWM1, PWM2) zu steuern, um den ersten bzw. den zweiten Schalter (S1, S2) ein-und auszuschalten;
**dadurch gekennzeichnet, dass**
basierend auf einem aktiven Zeitanteil des externen Signals, die Steuerlogik (106) dafür ausgelegt ist, gleichzeitig den aktiven Zeitanteil des zweiten Steuersignals (PWM2) und die Anzahl von Schaltzyklen des ersten Steuersignals (PWM1) zu bestimmen, um den ersten Schalter (S1) ein- und auszuschalten.

2. LED-Treiber nach Anspruch 1, wobei es sich bei dem ersten und dem zweiten Steuersignal um pulsbreitenmodulierte PWM-Signale handelt.

3. LED-Treiber nach Anspruch 2, wobei der aktive Zeitanteil des zweiten Steuersignals (PWM2) mit einem Tastverhältnis des zweiten Steuersignals (PWM2) verknüpft ist.

4. LED-Treiber nach Anspruch 1, wobei, falls der aktive Zeitanteil des zweiten Steuersignals (PWM2) kleiner als ein Produkt aus einer vordefinierten Anzahl von Schaltzyklen des ersten Steuersignals multipliziert mit einer Zeitperiode des ersten Steuersignals (PWM1) ist, die Steuerlogik (106) dafür ausgelegt ist, die Anzahl von Schaltzyklen des ersten Steuersignals (PWM1) als äquivalent zu der oder größer als die vordefinierte(n) Anzahl von Schaltzyklen zu bestimmen; wobei optional die vordefinierte Anzahl von Schaltzyklen des ersten Steuersignals (PWM1) eine Reduktion einer Welligkeit des Spannungspegels am Ausgangsspannungsknoten bewirkt.

5. LED-Treiber nach Anspruch 1, wobei, falls der aktive Zeitanteil des zweiten Steuersignals (PWM2) größer als ein Produkt aus einer vordefinierten Anzahl von Schaltzyklen des ersten Steuersignals multipliziert mit einer Zeitperiode des ersten Steuersignals (PWM1) ist, die Steuerlogik (106) dafür ausgelegt ist zu veranlassen, dass die Zeitdauer zum Beibehalten des alternativen Ein- und Ausschaltens des ersten Schalters (S1) gleich dem aktiven Zeitanteil des zweiten Steuersignals (PWM2) sein soll.

6. LED-Treiber nach Anspruch 1, ferner umfassend eine Stromsenke, die mit dem zweiten Schalter (S2) gekoppelt ist, wobei die Stromsenke dafür ausgelegt ist, einen Pegel des Stroms zu bestimmen, der durch die mehreren LEDs (102) fließt.

7. Verfahren, umfassend:
Empfangen, durch eine Steuerlogik (106) eines Leuchtdioden (Light Emitting Diode, LED)-Treibers, eines externen pulsbreitenmodulierten PWM-Signals;
Empfangen, durch die Steuerlogik (106), einer Zeitperiode eines ersten Steuersignals (PWM1), um einen ersten Schalter (S1) des LED-Treibers alternativ ein- und auszuschalten;
basierend auf einem aktiven Zeitanteil des externen PWM-Signals, gleichzeitiges Bestimmen, durch die Steuerlogik (106), eines aktiven Zeitanteils eines zweiten Steuersignals (PWM2), um einen zweiten Schalter (S2) des LED-Treibers und eine Anzahl von Schaltzyklen des ersten Steuersignals (PWM1) zu steuern, um den ersten Schalter (S1) ein- und auszuschalten;
Vergleichen, durch die Steuerlogik (106), des aktiven Zeitanteils des zweiten Steuersignals (PWM2) und der Zeitperiode des ersten Steuersignals (PWM1); und
basierend auf dem Vergleich, Bestimmen, durch die Steuerlogik (106), der Zeitdauer zum Beibehalten des alternativen Ein- und Ausschaltens des ersten Schalters (S1) des LED-Treibers;
Ausgeben des zweiten Steuersignals (PWM2) an den zweiten Schalter (S2) und des ersten Steuersignals an den ersten Schalter (S1);
wobei eine LED-Kette, die mehrere LEDs (102) aufweist, seriell mit dem ersten und dem zweiten Schalter (S1, S2) verbunden ist.

8. Verfahren nach Anspruch 7, wobei das Vergleichen des aktiven Zeitanteils des zweiten Steuersignals (PWM2) und der Zeitperiode des ersten Steuersignals (PWM1) ferner beinhaltet:
Falls der aktive Zeitanteil des zweiten Steuersignals (PWM2) kleiner als ein Produkt aus einer vordefinierten Anzahl von Ein- und Ausschaltvorgängen für das erste Steuersignal multipliziert mit der Zeitperiode des ersten Steuersignals (PWM1) ist, Bestimmen, dass die Zeitdauer zum Beibehalten des alternativen Ein- und Ausschaltens des ersten Schalters (S1) äquivalent zu der vordefinierten Anzahl sein soll.

9. Verfahren nach Anspruch 7, wobei das Vergleichen des aktiven Zeitanteils des zweiten Steuersignals (PWM2) und der Zeitperiode des ersten Steuersignals (PWM1) ferner beinhaltet:
Falls der aktive Zeitanteil des zweiten Steuersignals (PWM2) größer als ein Produkt aus einer vordefinierten Anzahl von Ein- und Ausschaltvorgängen für das erste Steuersignal multipliziert mit der Zeitperiode des ersten Steuersignals (PWM1) ist, Bestimmen, dass die Zeitdauer zum Beibehalten des alternativen Ein- und Ausschaltens des ersten Schalters (S1) gleich dem aktiven Zeitanteil des zweiten Steuersignals (PWM2) sein soll.

10. Verfahren nach Anspruch 7, wobei das Vergleichen des aktiven Zeitanteils des zweiten Steuersignals (PWM2) und der Zeitperiode des ersten Steuersignals (PWM1) ferner beinhaltet:
Falls der aktive Zeitanteil des zweiten Steuersignals (PWM2) größer als aber nicht äquivalent zu ein(em) Produkt aus einer vordefinierten Anzahl von Ein- und Ausschaltvorgängen für das erste Steuersignal multipliziert mit der Zeitperiode des ersten Steuersignals (PWM1) ist, Bestimmen, dass die Zeitdauer zum Beibehalten des alternativen Ein- und Ausschaltens des ersten Schalters (S1) größer als der aktive Zeitanteil des zweiten Steuersignals (PWM2) sein soll.

11. Verfahren nach Anspruch 7, wobei es sich bei dem ersten und dem zweiten Steuersignal (PWM1, PWM2) um PWM-Signale handelt.

12. Verfahren nach Anspruch 7, wobei das zweite Steuersignal (PWM2) dafür ausgelegt ist, über eine Stromsenke einen Pegel von Strom zu steuern, der durch die LED-Kette geleitet wird, die mit dem zweiten Schalter (S2) und der Stromsenke gekoppelt ist.

## Revendications

1. Circuit d'attaque de diodes électroluminescentes DEL, comprenant :
un premier commutateur (S1) destiné à recevoir une tension d'entrée en provenance d'une source de tension d'entrée (Vᵢₙ) et couplé à un nœud de tension de sortie, ledit commutateur étant configuré pour être mis en circuit et hors circuit de manière à réguler un niveau de tension au niveau d'un nœud de tension de sortie, le niveau de tension au nœud de tension de sortie servant à alimenter une pluralité de DEL (102) ;
un second commutateur (S2) couplé à la pluralité de DEL (102), et configuré pour passer et bloquer le courant à travers la pluralité de DEL de manière à faire varier une luminosité de la pluralité de DEL (102) ; et
une logique de commande (106) couplée aux premier et second commutateurs (S1, S2), et, sur la base d'un signal modulé en largeur d'impulsion, PWM, externe, configurée pour
commander des premier et second signaux de commande (PWM1, PWM2) pour mettre en circuit et hors circuit les premier et second commutateurs (S1, S2), respectivement ;
**caractérisé en ce que**,
sur la base d'une période d'état actif du signal externe, la logique de commande (106) est configurée pour déterminer simultanément la période d'état actif du second signal de commande (PWM2) et le nombre de cycles de commutation du premier signal de commande (PWM1) pour mettre en circuit et hors circuit le premier commutateur (S1).

2. Circuit d'attaque de DEL selon la revendication 1 dans lequel les premier et second signaux de commande sont des signaux modulés en largeur d'impulsion PWM.

3. Circuit d'attaque de DEL selon la revendication 2 dans lequel la période d'état actif du second signal de commande (PWM2) est associée à un rapport cyclique du second signal de commande (PWM2).

4. Circuit d'attaque de DEL selon la revendication 1 dans lequel si la période d'état actif du second signal de commande (PWM2) est inférieure à un produit d'un nombre prédéfini de cycles de commutation du premier signal de commande par une période du premier signal de commande (PWM1), la logique de commande (106) est configurée pour déterminer que le nombre de cycles de commutation du premier signal de commande (PWM1) soit être égal ou supérieur au nombre prédéfini de cycles de commutation ; facultativement dans lequel le nombre prédéfini de cycles de commutation du premier signal de commande (PWM1) entraîne une réduction d'une ondulation du niveau de tension au nœud de tension de sortie.

5. Circuit d'attaque de DEL selon la revendication 1 dans lequel si la période d'état actif du second signal de commande (PWM2) est supérieure à un produit d'un nombre prédéfini de cycles de commutation du premier signal de commande par une période de temps du premier signal de commande (PWM1), la logique de commande (106) est configurée pour faire en sorte que la quantité de temps pour maintenir les mises en circuit et hors circuit alternée du premier commutateur (S1) soit égale à la période d'état actif du second signal de commande (PWM2) .

6. Circuit d'attaque de DEL selon la revendication 1 comprenant en outre un consommateur de courant couplé au second commutateur (S2), ledit consommateur de courant étant configuré pour déterminer un niveau de courant traversant la pluralité de DEL (102).

7. Procédé, comprenant :
la réception, par une logique de commande (106) d'un circuit d'attaque de diodes électroluminescentes DEL, d'un signal modulé en largeur d'impulsion PWM externe ;
la réception, par la logique de commande (106), d'une période de temps d'un premier signal de commande (PWM1) pour mettre en circuit et hors circuit de manière alternée un premier commutateur (S1) du circuit d'attaque de DEL ;
sur la base d'une période d'état actif du signal PWM externe, la détermination simultanée, par la logique de commande (106), d'une période d'état actif d'un second signal de commande (PWM2) pour commander un second commutateur (S2) du circuit d'attaque de DEL et d'un nombre de cycles de commutation du premier signal de commande (PWM1) pour mettre en circuit et hors circuit le premier commutateur (S1) ;
la comparaison, par la logique de commande (106), de la période d'état actif du second signal de commande (PWM2) et de la période de temps du premier signal de commande (PWM1) ; et
sur la base de la comparaison, la détermination, par la logique de commande (106), de la quantité de temps pour maintenir les mises en circuit et hors circuit alternées du premier commutateur (S1) du circuit d'attaque de DEL ;
la production en sortie du second signal de commande (PWM2) à destination dudit second commutateur (S2) et dudit premier signal de commande à destination dudit premier commutateur (S1) ;
dans lequel une série de DEL qui comporte une pluralité de DEL (102) connectées en série est couplée aux premier et second commutateurs (S1, S2).

8. Procédé selon la revendication 7 dans lequel la comparaison de la période d'état actif du second signal de commande (PWM2) et de la période de temps du premier signal de commande (PWM1) comporte en outre :
si la période d'état actif du second signal de commande (PWM2) est inférieure à un produit d'un nombre prédéterminé de mises en circuit et hors circuit du premier signal de commande par la période de temps du premier signal de commande (PWM1), la détermination que la quantité de temps pour maintenir les mises en circuit et hors circuit alternées du premier commutateur (S1) doit être égale au nombre prédéfini.

9. Procédé selon la revendication 7 dans lequel la comparaison de la période d'état actif du second signal de commande (PWM2) et de la période de temps du premier signal de commande (PWM1) comporte en outre :
si la période d'état actif du second signal de commande (PWM2) est supérieure à un produit d'un nombre prédéfini de mises en circuit et hors circuit du premier signal de commande par la période de temps du premier signal de commande (PWM1), la détermination que la quantité de temps pour maintenir les mises en circuit et hors circuit alternées du premier commutateur (S1) doit être égale à la période d'état actif du second signal de commande (PWM2).

10. Procédé selon la revendication 7 dans lequel la comparaison de la période d'état actif du second signal de commande (PWM2) et de la période de temps du premier signal de commande (PWM1) comporte en outre :
si la période d'état actif du second signal de commande (PWM2) est supérieure mais non égale à un produit d'un nombre prédéfini de mises en circuit et hors circuit du premier signal de commande par la période de temps du premier signal de commande (PWM1), la détermination que la quantité de temps pour maintenir les mises en circuit et hors circuit alternées du premier commutateur (S1) doit être supérieure à la période d'état actif du second signal de commande (PWM2).

11. Procédé selon la revendication 7 dans lequel les premier et second signaux de commande (PWM1, PWM2) sont des signaux PWM.

12. Procédé selon la revendication 7 dans lequel le second signal de commande (PWM2) est configuré pour réguler, par l'intermédiaire d'un consommateur de courant, un niveau de courant qui est passé à travers la série de DEL couplée au second commutateur (S2) et au consommateur de courant.
